# EUROPEAN PATENT SPECIFICATION

(11) **EP 3 546 183 B1**
(45) Date of publication and mention of the grant of the patent: **08.09.2021**
(21) Application number: 19163977.2
(22) Date of filing: 20.03.2019
(51) Int. Cl.: B29C 45/76, B29C 45/84, G06F 21/62

(54) **INJECTION MOLDING DATA MANAGEMENT DEVICE AND INJECTION MOLDING MACHINE**
SPRITZGIESSDATENVERWALTUNGSVORRICHTUNG UND SPRITZGIESSMASCHINE
DISPOSITIF DE GESTION DE DONNÉES DE MOULAGE PAR INJECTION ET MACHINE DE MOULAGE PAR INJECTION

(30) Priority: 30.03.2018 JP 2018066982
(43) Date of publication of application: 02.10.2019
(73) Proprietor: Sumitomo Heavy Industries, Ltd., Tokyo 141-6025 (JP)
(72) Inventor: HANO, Katsunobu, Chiba-shi, Chiba, 263-0001, (JP)
(74) Representative: Louis Pöhlau Lohrentz

(56) References cited:
- EP-A2- 1 621 944
- EP-A2- 3 009 902
- US-A1- 2011 224 808
- US-A1- 2017 104 760

## Description

### BACKGROUND OF THE INVENTION

### Field of the Invention

Present invention relates to an injection molding management device and an injection molding machine.

### Description of Related Art

An injection molding machine described in Japanese Unexamined Patent Publication No. 2002-307508 includes a control unit, and a detection value from each sensor provided in the injection molding machine is input to the control unit as actual data for each cycle (shot) and is stored in the control unit. For example, the actual data stored for each cycle includes a filling time, a plasticizing time, a cushion position of a screw, a holding pressure completion position of a screw, a V/P switching position of a screw, a filling peak pressure, or the like. The actual data is used for quality management of a molding product and is displayed on a display screen.

European Patent Application EP1621944A2 discloses a security system and method for an industrial automation system.

European Patent Application EP3009902A2 discloses industrial automation systems and custom properties in an application environment associated with an industrial automation system.

United States Patent Application US2017/104760A1 discloses a system for controlling views of resources of a plant control environment.

United States Patent Application US2011/224808A1 discloses an object entity for use in configuring or viewing the operation of a process plant.

### SUMMARY OF THE INVENTION

In recent years, software for viewing a screen of a personal computer from a remote location is commercially available, and it is possible to view a display screen of an injection molding machine from a remote location using this software.

The display data displayed on the display screen of the injection molding machine also includes confidential information which generates disadvantages when the confidential information is disclosed to the outside.

A main object of an aspect of an embodiment is to suppress leakage of confidential information generated by remote viewing of display data displayed on a display screen of an injection molding machine.

According to an aspect of an embodiment, there is provided an injection molding data management device including: a display data storage unit which stores display data displayed on a display screen of an injection molding machine; and a viewing permission/rejection setting unit which sets, with respect to a viewing requirement of the display data from a terminal communicably connected via a network, an item permitting viewing of the display data for the terminal and an item rejecting the viewing of the display data for the terminal, in which the viewing permission/rejection setting unit is configured to set, for each content of an abnormality occurring in the injection molding machine or a peripheral unit of the injection molding machine, the item permit ting the viewing of the display data for the terminal and the item rejecting the viewing of the display data for the terminal.

According to an alternative embodiment, there is provided an injection molding data management device including: a display data storage unit which stores display data displayed on a display screen of an injection molding machine; a viewing permission/rejection setting unit which sets, with respect to a viewing requirement of the display data from a terminal communicably connected via a network, an item permitting viewing of the display data for the terminal and an item rejecting the viewing of the display data for the terminal; and a viewing prohibition unit before occurrence of abnormality, in which the viewing prohibition unit before occurrence of abnormality is configured to prohibit the viewing of the display data for the terminal while the injection molding machine or a peripheral unit of the injection molding machine is operated normally and release prohibition of the viewing of the display data for the terminal when an abnormality occurs in the injection molding machine or the peripheral unit (20) of the injection molding machine.

According to the aspect of the embodiment, it is possible to suppress leakage of confidential information generated by remote viewing of the display data displayed on the display screen of the injection molding machine.

### BRIEF DESCRIPTION OF THE DRAWINGS

Fig. 1 is a diagram showing a state when a mold opening of an injection molding machine according to an embodiment is completed.
Fig. 2 is a diagram showing a state when a mold of the injection molding machine according to the embodiment is clamped.
Fig. 3 is a functional block diagram showing components of a control unit which is an injection molding data management device according to an embodiment.
Fig. 4 is a diagram showing a display screen in the injection molding machine according to the embodiment.
Fig. 5 is a flowchart showing a first example of processing performed by a molding machine maker and a molding machine user.
Fig. 6 is a diagram showing a first selection screen when an input field is pushed after an item-based permission/rejection setting button in the injection molding machine according to the embodiment is pushed.
Fig. 7 is a diagram showing a display screen displayed on a terminal according to a selection result of the first selection screen shown in Fig. 6.
Fig. 8 is a flowchart showing a second example of the processing performed by the molding machine maker and the molding machine user.
Fig. 9 is a diagram showing a second selection screen when an abnormality-based permission/rejection setting button in the injection molding machine in the injection molding machine according to the embodiment is pushed.
Fig. 10 is a diagram showing a display screen displayed on the terminal according to the selection result of the second selection screen shown in Fig. 9 when a temperature related abnormality occurs.
Fig. 11 is a diagram showing a display screen displayed on the terminal according to the selection result of the second selection screen shown in Fig. 9 when an injection related abnormality occurs.
Fig. 12 is a flowchart showing a third example of the processing performed by the molding machine maker and the molding machine user.
Fig. 13 is a diagram showing a third selection screen for selecting an item to apply a viewing permission to the injection molding machine from the terminal in the injection molding machine in the injection molding machine according to the embodiment.
Fig. 14 is a diagram showing a fourth selection screen which is displayed on the injection molding machine when an application for the viewing permission from the terminal in the injection molding machine in the injection molding machine according to the embodiment is performed.
Fig. 15 is a diagram showing a display screen displayed on the terminal according to a selection result of the fourth selection screen shown in Fig. 14.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### (Injection Molding Machine)

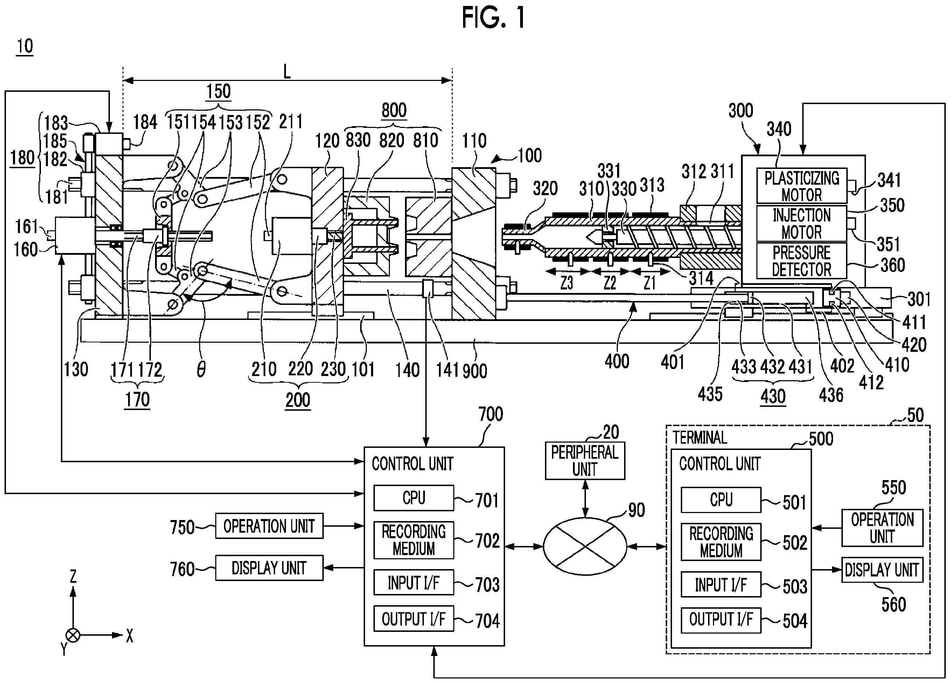

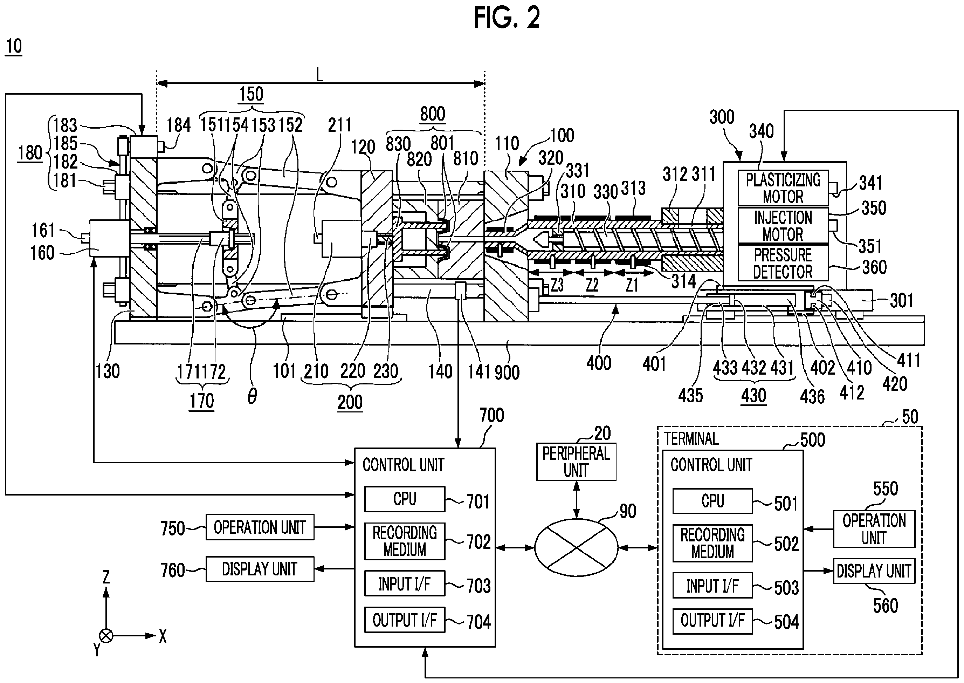

Fig. 1 is a diagram showing a state when a mold opening of an injection molding machine according to an embodiment is completed. Fig. 2 is a diagram showing a state when a mold of the injection molding machine according to the embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 includes the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. Aplurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a pressurization process, a depressurization process, a mold opening process, or the like under the control of the control unit 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used. During the mold closing process, the crosshead 151 may be temporarily stopped such that the movable platen 120 is temporarily stopped. An insert material can be installed in the movable mold 820 or the stationary mold 810 in a state where the movable mold 820 is temporarily stopped.

In the pressurization process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. One cavity space 801 may be provided. However, as shown in Fig. 2, a plurality of cavity spaces 801 may be provided. In the latter case, a plurality of molding products can be simultaneously obtained. The insert material may be disposed in a portion of the cavity space 801 and another portion of the cavity space 801 may be filled with the molding material. A molding product in which the insert material and the molding material are integrated with each other is obtained.

In the depressurization process, the mold clamping motor 160 is driven to move the crosshead 151 rearward from the mold clamping start position to a mold opening completion position, and thus, the movable platen 120 is moved rearward and the mold clamping force decreases. The mold opening start position and the mold closing completion position may be the same as each other.

In the mold opening process, the mold clamping motor 160 is driven to move the crosshead 151 rearward from the mold opening start position to a mold opening completion position at a set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the pressurization process are collectively set as a series of setting conditions. For example, the movement speed or positions (including mold opening/closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (including mold opening start position, movement speed switching position, and mold opening completion position) of the crosshead 151 in the depressurization process and the mold opening process are collectively set as a series of setting conditions. The mold opening start position, the movement speed switching position, and the mold opening completion position are arranged in this order from the front side to the rear side and indicate start points and end points of sections where the movement speed is set. The movement speed is set for each section. The movement speed switching position may be one or more. The movement speed switching position may not be set. The mold opening start position and the mold closing completion position may be the same as each other. In addition, the mold opening completion position and the mold opening/closing start position may be the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotation driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set movement speed, and thus, the movable member 830 moves forward and the molding product is ejected. Thereafter, the ejector motor 210 is driven to move the ejector rod 230 rearward at a set movement speed, and thus, the movable member 830 moves rearward to an original standby position. For example, a position or movement speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod movement speed detector which detects the movement speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones Z1 to Z3 in an axial direction (right and left directions in Figs. 1 and 2) of the cylinder 310. The heating unit 313 and the temperature detector 314 are provided in each of the plurality of zones Z1 to Z3. The control unit 700 controls the heating unit 313 such that a set temperature is set for each of the plurality of zones Z1 to Z3 and a detection temperature of the temperature detector 314 becomes the set temperature.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects a force applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

The positions and the rotational speeds of the screw 330 in the plasticizing process are collectively set as a series of setting conditions. For example, a plasticizing start position, a rotational speed switching position, and the plasticizing completion position are set. The positions are arranged in this order from the front side toward the rear side and indicate start points or end points of the sections where the rotational speed is set. The rotational speed is set for each section. The rotational speed switching position may be one or more. The rotational speed switching position may not be set. Moreover, a back pressure is set for section.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

The positions and the movement speeds of the screw 330 in the filling process are collectively set as a series of setting conditions. For example, a filling start position, a movement speed switching position, and the V/P switching position are set. The positions are arranged in this order from the rear side toward the front side and indicate start points or end points of the sections where the movement speed is set. The movement speed is set for each section. The movement speed switching position may be one or more. The movement speed switching position may not be set.

An upper limit value of a pressure of the screw 330 is set for each section in which the movement speed of the screw 330 is set. The pressure of the screw 330 is detected by the pressure detector 360. In a case where a detection value of the pressure detector 360 is equal to or less than a set pressure, the screw 330 moves forward at a set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is equal to or less than the set pressure.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like. A plurality of holding pressures and a plurality of holding times holding the holding pressures may be set in the holding pressure process and are collectively set as a series of setting conditions .

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704. The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the plasticizing process, the mold closing process, the pressurization process, the filling process, the holding pressure process, the cooling process, the depressurization process, the mold opening process, the ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the filling process, the holding pressure process, the cooling process, the depressurization process, the mold opening process, and the ejection process in this order. Here, this order is an order of the start of each process. In the filling process, the holding pressure process, and the cooling process are performed between the start of the pressurization process to the end of the depressurization process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle or may be performed from the start of the pressurization process to the end of the depressurization process. Inthiscase, the mold closing process may be performed at an initial stage of the molding cycle. In addition, the filling process may start during the mold closing process. Moreover, the ejection process may be started during the mold opening process. In a case where an on/off valve which opens and closes the flow path of the nozzle 320 is provided, the mold opening process may be started during the plasticizing process. Accordingly, even when the mold opening process starts during the plasticizing process, if the on/off valve closes the flow path of the nozzle 320, the molding material does not leak from the nozzle 320.

Moreover, the once molding cycle may include a process other than the plasticizing process, the mold closing process, the pressurization process, the filling process, the holding pressure process, the cooling process, the depressurization process, the mold opening process, and the ejection process. For example, before the plasticizing process starts after the holding pressure process is completed, a pre-plasticizing suck-back process in which the screw 330 moves rearward to the plasticizing start position set in advance may be performed. Accordingly, it is possible to decrease the pressure of the molding material accumulated in front of the screw 330 before the plasticizing process starts and it is possible to prevent the screw 330 from abruptly moving rearward when the plasticizing process starts.

The control unit 700 is connected to an operation unit 750 or the display unit 760. The operation unit 750 receives an input operation from a user and outputs a signal corresponding to the input operation to the control unit 700. The display unit 760 displays the display screen corresponding to the input operation of the operation unit 750 under the control of the control unit 700.

The display screen is used for the setting of the injection molding machine 10 or the like. A plurality of display screens are provided, and thus, are displayed to be switched or to overlap each other. The user operates the operation unit 750 while viewing the display screen displayed on the display unit 760 to perform the setting (including an input of a set value) of the injection molding machine 10 or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be independently provided. In addition, a plurality of operation units 750 may be provided.

### (Injection Molding Data Management Device)

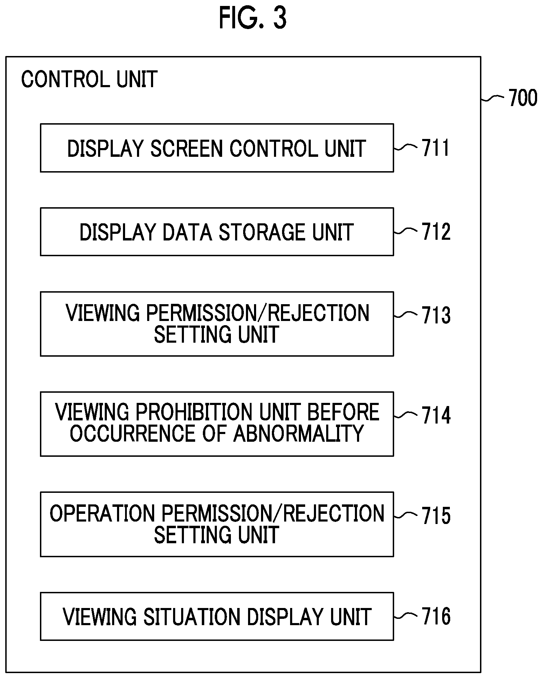

Fig. 3 is a functional block diagram showing components of a control unit which is an injection molding data management device according to an embodiment. Each functional block shown in Fig. 3 is conceptual and do not necessarily have to be physically configured as shown. It is possible to configure all or a part of the functional blocks by functionally or physically dispersing and integrating the functional blocks in a predetermined unit. All or a portion of processing functions performed in each functional block can be realized by a program executed by the CPU or can be realized as hardware by wired logic. Moreover, in the present embodiment, the control unit 700 is used as the injection molding data management device. However, a computer different from the control unit 700 may be used as the injection molding data management device.

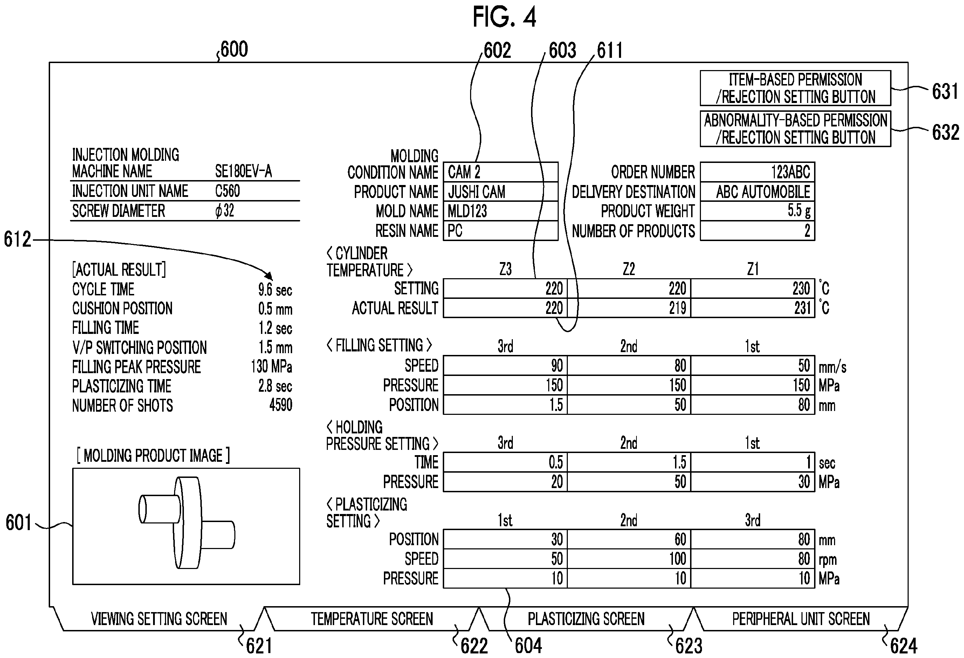

The control unit 700 has a display screen control unit 711 which controls a display screen 600 (refer to Fig. 4) displayed on the injection molding machine 10. For example, the display screen 600 includes input fields 601 to 604 to which at least one selected from a letter, a number and an image is input, and actual result display fields 611 and 612 on which actual values are displayed. Each of the input fields 601 to 604 and the actual result display fields 611 and 612 may be surrounded by a ruled line or may not be surrounded by a ruled line. Item names are assigned to the input fields 601 to 604 and the actual result display fields 611 and 612, respectively. Moreover, the display screen 600 may have only one of the input fields 601 to 604 and the actual result display fields 611 and 612.

The input fields 601 to 604 also serve as display fields on which input data input to the input fields 601 to 604 is displayed. For example, numerical values input to the input fields 603 to 604 are set values to be compared with the detection value detected by the detector in the injection molding machine 10. Electric devices such as a motor and a heater are controlled such that a deviation between the set value and the detection value decreases.

The control unit 700 includes a display data storage unit 712 which stores the display data displayed on the display screen of the injection molding machine 10. The display data storage unit 712 stores the input data input to the input fields 601 to 604 of the display screen 600 in the recording medium 702. In addition, the display data storage unit 712 stores the actual value displayed in the actual result display fields 611 and 612 of the display screen 600 in the recording medium 702. The actual value displayed on the actual result display fields 611 and 612 is the detection value detected by the detector.

Fig. 4 is a diagram showing a display screen in the injection molding machine according to the embodiment. For example, items of the display data displayed on the display screen 600 include an injection molding machine name, an injection unit name, a screw diameter, a molding condition name, a product name, a mold name, a resin name, an order number, a delivery destination, a product weight, the number of products, a molding product image, a temperature, a speed, a pressure, a position, a time, and the number of shots.

The inj ection molding machine name, the injection unit name, and the screw diameter are input when the injection molding machine 10 is manufactured. Since the input data are not updated, the input data maybe rendered so as not to be rewritten . The injection molding machine name is a model name of the injection molding machine, and the injection unit name is a model name of the injection unit.

The molding condition name, the product name, the mold name, the order number, the delivery destination, the product weight, the number of products, and the molding product image are input and stored for each mold unit 800 and selected when the mold unit 800 is replaced so as to be updated and displayed in the input field. The delivery destination is a destination to which the molding product is delivered, the product weight is a weight per molding product, and the number of products is the number of molding products obtained by one shot.

The set values of the temperature, the speed, the pressure, position, and the time are input and stored for each mold unit 800 and selected when the mold unit 800 is replaced so as to be updated and displayed in the input field. The temperature of the cylinder 310 is set for each of the zones Z1 to Z3 of the cylinder 310. The movement speed of the screw 330 in the filling process is set for each section, and a position of the end point of each section and an upper limit of the pressure in each section are set. A plurality of holding pressures and a plurality of holding times in the holding pressure process are set. The rotational speed of the screw 330 in the plasticizing process is set for each section and a position at the end point of each section and a back pressure in each section are set.

The actual values of the temperature, the speed, the pressure, the position, and the time are detected by the detector in the injection molding machine 10 for each shot, recorded for each shot, updated and displayed on the actual result display field. The cushion position is a most forward movement position of the screw 330 in the filling process and the holding pressure process, the plasticizing time is a time required for the filling process, a filling peak pressure is a maximum value of the detection values of the pressure detector 360 in the filling process, and the filling time is a time required for the plasticizing process.

The number of shots is a frequency of the shots, and is incremented by one by one each time the shot is repeated. For example, the number of shots is counted by a counter provided in the control unit 700.

The display data (hereinafter, also simply referred to as "display data") displayed on the display screen 600 is not limited to the items shown in Fig. 4. For example, the display data may be data such as a set value and an actual value of the peripheral unit 20. For example, the peripheral unit 20 includes a mold temperature controller which controls the temperature of the mold unit 800, an extraction machine which extracts the molding product from the mold unit 800, an inspection machine which inspects the molding product extracted from the mold unit 800, an assembling machine which assembles the molding product extracted from the mold unit 800 with another part, or the like.

The display screen 600 includes screen switching buttons 621 to 624 which switches the display screen. For example, when the screen switching button 624 is pushed, a peripheral unit screen displaying data such as the set value and the actual value of the peripheral unit 20 is displayed as the display screen. The peripheral unit screen includes at least one of an input field in which the set value of the peripheral unit 20 is input and an actual result display field in which the actual value of the peripheral unit 20 is displayed.

In recent years, software by which a screen of a personal computer is viewed from a remote location is commercially available, and it is possible to view the display screen 600 of the injection molding machine 10 from a terminal 50 (refer to Figs. 1 and 2) at a remote location using this software. The terminal 50 is communicably connected to the control unit 700 via a network 90 such as a Local Area Network (LAN) or an internet line. The connection can be either a wired connection or a wireless connection.

For example, a mechanic of a molding machine maker can use the terminal 50 to view the display data displayed on the display screen 600 of the injection molding machine 10 delivered to a molding machine user. Therefore, the mechanic of the molding machine maker can analyze a cause of an abnormality occurring in the injection molding machine 10 or the peripheral unit 20 without going to a delivery destination of the injection molding machine 10.

Similarly to the injection molding machine 10, the terminal 50 has a control unit 500. For example, the control unit 500 is composed of a computer and includes a Central Processing Unit (CPU) 501, a recording medium 502 such as a memory, an input interface 503, and an output interface 504. The control unit 500 performs various controls by causing the CPU 501 to execute a program stored in the recording medium 502. In addition, the control unit 500 receives a signal from the outside through the input interface 503 and transmits the signal to the outside through the output interface 504.

The control unit 500 is connected to an operation unit 550 and a display unit 560. The operation unit 550 receives an input operation performed by the user and outputs a signal corresponding to the input operation to the control unit 500. The display unit 560 displays a display screen corresponding to the input operation in the operation unit 550 under the control of the control unit 500. For example, the operation unit 550 and the display unit 560 may be configured of a touch panel to be integrated with each other. In addition, although the operation unit 550 and the display unit 560 of the present embodiment are integrated with each other, the operation unit 550 and the display unit 560 may be provided independently from each other. Also, a plurality of operation units 550 may be provided.

The control unit 500 transmits a viewing requirement of the display data displayed on the display screen 600 of the injection molding machine 10 to the injection molding machine 10, and if the injection molding machine 10 permits the viewing from the terminal 50, it is possible to view the display screen 600 of the injection molding machine 10 in the display unit 560 of the terminal 50. Moreover, the control unit 500 transmits an operation requirement on the display screen 600 of the injection molding machine 10 to the injection molding machine 10, and if the injection molding machine 10 permits the operation from the terminal 50, it is possible to operate the operation of the display screen 600 of the injection molding machine 10 in the operation unit 550 of the terminal 50.

Meanwhile, the display data displayed on the input fields 601 to 604 and the actual result display field 611 and 612 on the display screen 600 of the injection molding machine 10 also include confidential information which generates disadvantages when the confidential information is disclosed to the outside. The confidential information may be unnecessary information for maintenance of the injection molding machine 10.

Therefore, as shown in Fig. 3, the control unit 700 includes a viewing permission/rejection setting unit 713 which sets an item which permits the viewing of the display data for the terminal 50 and an item which rejects the viewing of the display data for the terminal 50 with respect to the viewing requirement of the display data from the terminal 50 (refer to Figs. 1 and 2) . The display data to be displayed in the input field or the actual result display field of the item set by the viewing permission/rejection setting unit 713 permitting the viewing for the terminal 50 is displayed on the display unit 560 of the terminal 50. Meanwhile, the display data to be displayed in the input field or the actual result display field of the item set by the viewing permission/rejection setting unit 713 rejecting the viewing for the terminal 50 is displayed in black by display unit 560 of the terminal 50, is hidden or is not displayed by a blank or mosaic, or is displayed to be replaced by a symbol which has no meaning. The display molding data displayed on the terminal 50 can be selected on the injection molding machine 10 side and leakage of the confidential information to the outside can be suppressed.

For example, the viewing permission/rejection setting unit 713 sets the item which permits the viewing of the display data for the terminal 50 and the item which rejects the viewing of the display data for the terminal 50 with respect to the viewing requirement on the display screen 600 in the injection molding machine 10 from the terminal 50. A display screen obtained by processing and editing the display screen 600 in the injection molding machine 10 is displayed on the terminal 50. It is possible to view the same display screen in the injection molding machine 10 and the terminal 50 except for the display data of the item which rejects the viewing for the terminal 50. As a result, for example, the mechanic of the molding machine maker can analyze the cause of the abnormality while viewing a familiar own display screen.

Moreover, except for some display data, the same display screen is displayed at the same time in the injection molding machine 10 and the terminal 50. However, the same display screen may not be displayed at the same time. In any case, the mechanic of the molding machine maker can analyze the cause of the abnormality while viewing the familiar own display screen.

In addition, the terminal 50 of the present embodiment requires the viewing of the display screen 600 displayed in the injection molding machine 10. However, the terminal 50 may require the viewing of only the display data displayed on the display screen 600. In this case, when a user of the terminal 50 views the display data displayed on the display screen 600 of the injection molding machine 10 at the terminal 50, a display screen (for example, only the required display data) of a completely different format from the display screen 600 may be displayed on the terminal 50. Also in this case, the display data displayed on the terminal 50 can be selected on the injection molding machine 10 side.

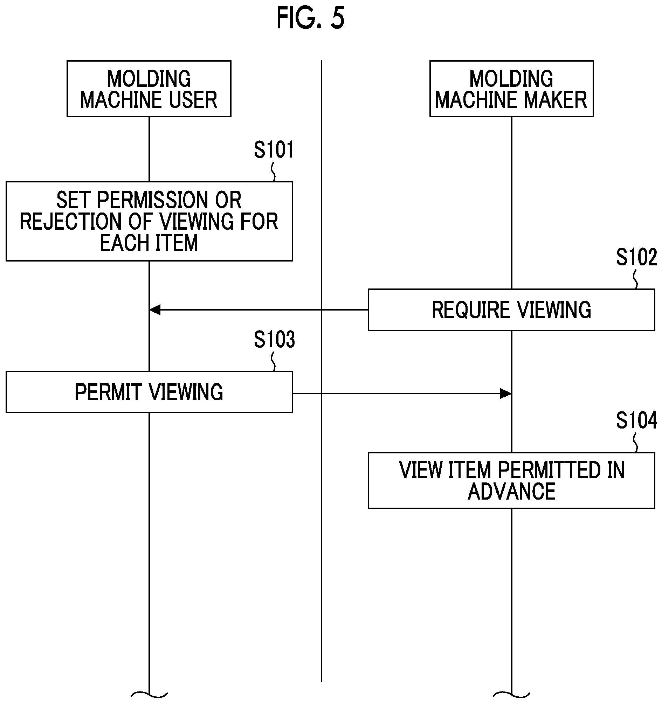

Fig. 5 is a flowchart showing a first example of processing performed by the molding machine maker and the molding machine user. First, the molding machine user sets permission or rejection of the viewing for each item (Step S101) . Next, the molding machine maker transmits a signal requiring the viewing from the terminal 50 to the injection molding machine 10 (Step S102) . Thereafter, the molding machine user transmits a signal permitting the viewing to the terminal from the injection molding machine 10 (Step S103) . Subsequently, the molding machine maker views the display data of the item of the viewing, which is previously permitted by the molding machine user, on the terminal 50 (step S104) . The processing shown in Fig. 5 may be performed automatically under the controls of the control unit 700 of the injection molding machine 10 and the control unit 500 of the terminal 50 or may be performed manually.

In this case, before the viewing permission/rejection setting unit 713 receives the viewing requirement of the display data from the terminal 50, the viewing permission/rejection setting unit 713 sets the item permitting the viewing of the display data for the terminal 50 and the item rejecting the viewing of the display data for the terminal 50. The permission or rejection of the viewing is set on the injection molding machine 10 side before receiving the viewing requirement from the terminal 50 is performed, and thus, it is possible to shorten a waiting time until the display data can be viewed on the terminal 50.

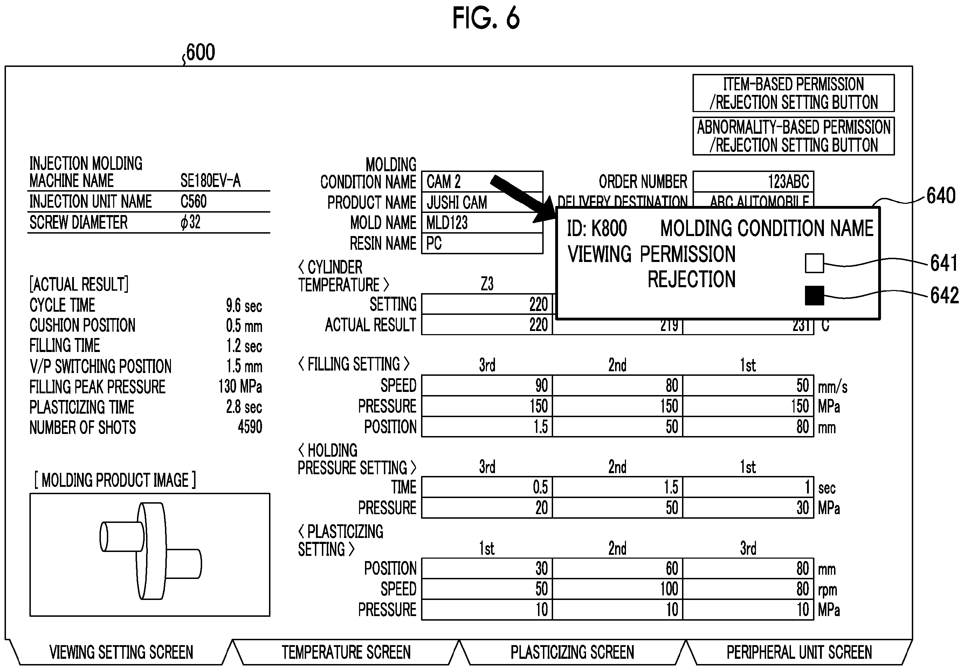

Before the viewing permission/rejection setting unit 713 receives the viewing requirement of the display data from the terminal 50, the viewing permission/rejection setting unit 713 displays a first selection screen 640 (refer to Fig. 6) which selects, for each item, the viewing of the display data in the terminal 50, on the display unit 760 of the injection molding machine 10. According to a selection result in the first selection screen 640, the viewing permission/rejection setting unit 713 sets the item permitting the viewing of the display data for the terminal 50 and the item rejecting the viewing of the display data for the terminal 50.

Fig. 6 is a diagram showing the first selection screen when the input field is selected after an item-based permission/rejection setting button in the injection molding machine according to the embodiment is pushed. For example, when an item-based permission/rejection setting button 631 displayed on the display screen 600 is pushed, in the display data displayed in the input fields 601 to 604 and the actual result display fields 611 and 612, an item-based permission/rejection selection mode in which the permission or rejection of the viewing for the terminal 50 is selected is effective. The item-based permission/rejection selection mode is returned to invalidity if an elapsed time after the item-based permission/rejection setting button 631 is pushed reaches a set time.

For example, if the input field 602 is selected in a state where the item-based permission/rejection selection mode is effective, in the display data displayed on the selected input field 602, the first selection screen 640 selecting the permission or rejection of the viewing for the terminal 50 is displayed on the display unit 760 of the injection molding machine 10. Moreover, a selection screen displayed when the other input fields 601 and 603 to 604 or the actual result display fields 611 and 612 are selected in the state where the item-based permission/rejection selection mode is effective is similar to the first selection screen 640 shown in Fig. 6, and thus, descriptions thereof are omitted.

The first selection screen 640 has a permission button 641 permitting the viewing for the terminal 50 and a rejection button 642 rejecting the viewing for the terminal 50. In the first selection screen 640 shown in Fig. 6, the rejection button 642 is pushed, and the rejection of the viewing for the terminal 50 is selected. In addition, the first selection screen 640 is displayed to be overlapped on the display screen 600 in Fig. 6. However, the first selection screen 640 may be displayed on the display screen 600 so as to be replaced.

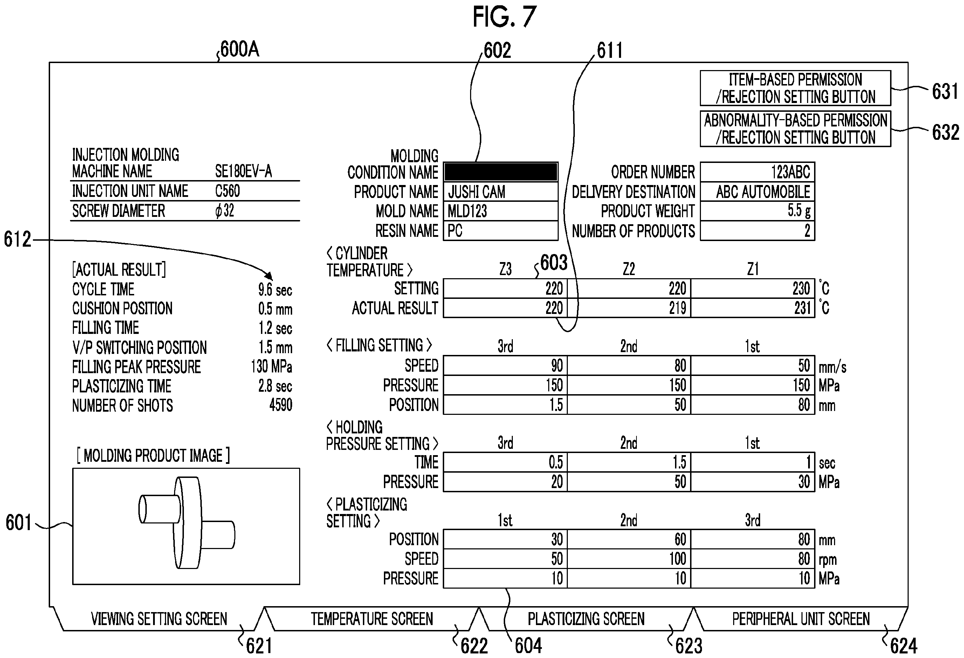

Fig. 7 is a diagram showing a display screen displayed on the terminal according to a selection result of the first selection screen shown in Fig. 6. A display screen 600A obtained by processing and editing the display screen 600 of the injection molding machine 10 according to the selection result of the first selection screen 640 shown in Fig. 6 is displayed on the terminal 50. The display data displayed on the terminal 50 can be selected on the injection molding machine 10 side and the leakage of the confidential information to the outside can be suppressed.

In the display screen 600A displayed on the terminal 50, as shown in Fig. 7, the display data of the item rejecting the viewing for the injection molding machine 10 is not displayed to be hidden in black. However, as described above, the display data may be displayed so as to be hidden by a blank or mosaic, or may be displayed so as to be replaced by a symbol which has no meaning. In any case, the display data displayed on the terminal 50 can be selected on the injection molding machine 10 side and the leakage of the confidential information to the outside can be suppressed.

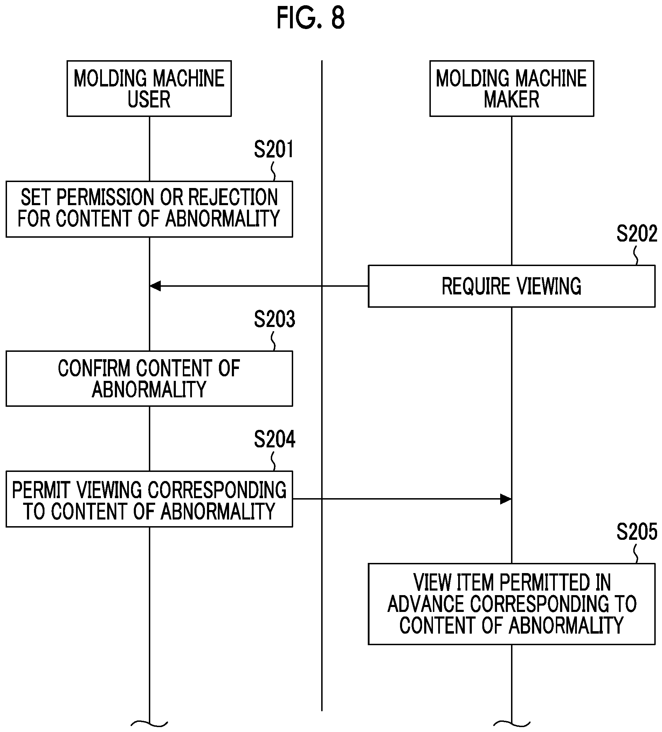

Fig. 8 is a flowchart showing a second example of the processing performed by the molding machine maker and the molding machine user. First, the molding machine user sets an item which permits or rejects the viewing for each content of an abnormality (Step S201) . Next, the molding machine maker transmits a signal requiring the viewing from the terminal 50 to the injection molding machine 10 (Step S202). Thereafter, the molding machine user confirms the content of the abnormality of the injection molding machine 10 (Step S203) and transmits a signal permitting the viewing corresponding to the content of the abnormality from the injection molding machine 10 to the terminal (Step S204). Subsequently, the molding machine maker views the display data of the item, which corresponds to the content of the abnormality and has the viewing permitted in advance, on the terminal 50 (Step S205). The processing shown in Fig. 8 may be performed automatically under the controls of the control unit 700 of the injection molding machine 10 and the control unit 500 of the terminal 50 or may be performed manually.

In this case, before the viewing permission/rejection setting unit 713 receives the viewing requirement of the display data from the terminal 50, the viewing permission/rejection setting unit 713 sets, for each content of the abnormality generated in the injection molding machine 10 or the peripheral unit 20, the item permitting the viewing of the display data for the terminal 50 and the item rejecting the view of the display data for the terminal 50. Since the permission or rejection of the viewing can be changed according to each content of the abnormality, it is possible to narrow the display data capable of performing the viewing the terminal 50 to the display data required to analyze the cause of the abnormality. The display data unnecessary to analyze the cause of the abnormality is the display data for which the terminal 50 does not request an information provision. By setting an item for which the terminal 50 does not request the information provision to the item rejecting the viewing for the terminal 50, it is possible to narrow the information that the injection molding machine 10 provides to the terminal 50 to a necessary minimum and it is possible to prevent an excessive information provision.

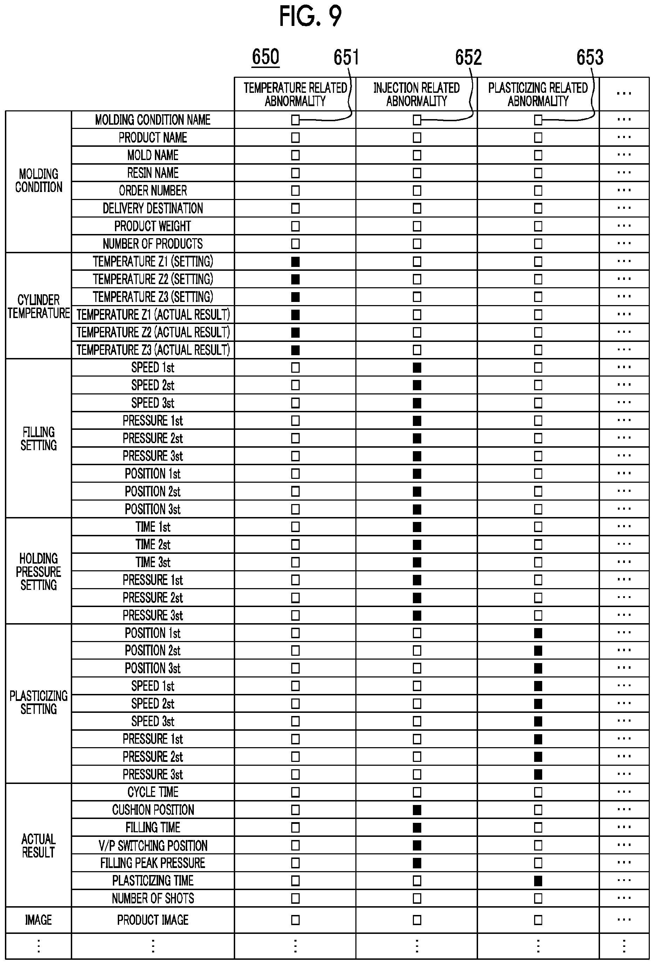

The viewing permission/rejection setting unit 713 displays a second selection screen 650 (refer to Fig. 9) which selects, for each item, the permission or rejection of the viewing of the display data for the terminal 50 according to the content of the abnormality, on the display unit 760 of the injection molding machine 10. The viewing permission/rejection setting unit 713 sets the item permitting the viewing of the display data for the terminal 50 and the item rejecting the viewing of the display data for the terminal 50, according to a selection result in the second selection screen 650.

Fig. 9 is a diagram showing a second selection screen when the abnormality-based permission/rejection setting button according to an embodiment is pushed. For example, if the abnormality-based permission/rejection setting button 632 displayed on the display screen 600 is pushed, the second selection screen 650 selecting the permission or rejection of the viewing for the terminal 50 is displayed on the display unit 760 of the injection molding machine 10.

The second selection screen 650 includes, for each item, selection buttons 651 to 653 selecting the permission or rejection of the viewing for the terminal 50 according to the content of the abnormality. For example, the content of the abnormality includes a temperature related abnormality, an injection related abnormality, and a plasticizing related abnormality.

For example, the temperature related abnormality includes a load of the heating unit 313 heating the cylinder 310 exceeding a threshold. For example, the injection related abnormality includes a load of the injection motor 350 exceeding a threshold. For example, the plasticizing related abnormality includes a load of the plasticizing motor 340 exceeding a threshold.

Moreover, the content of the abnormality is not limited to the temperature related abnormality, the injection related abnormality, and the plasticizing related abnormality. The abnormality may be any one as long as it can analyze the cause of the abnormality from the display data displayed on the display screen 600 of the injection molding machine 10, and may include an abnormality of the injection molding machine 10 or an abnormality of the peripheral unit 20.

The selection buttons 651 to 653 display the selection results, and the displays of the selection buttons 651 to 653 are switched each time the selection buttons 651 to 653 are pushed. For example, the inside of each of the selection buttons 651 to 653 being black means that the viewing is permitted for the terminal 50. Meanwhile, the inside of each of the selection buttons 651 to 653 being blank means that the viewing is rejected for the terminal 50.

In the second selection screen 650 shown in Fig. 9, as the item permitting the viewing for the terminal 50 when the temperature related abnormality occurs, an actual temperature and a set temperature are selected in each of the three zones Z1 to Z3 heated by different heating units 313. The other items are selected as the items rejecting the viewing for the terminal 50 except for the items (the injection molding machine name, the injection unit name, and the screw diameter) which are not displayed on the second selection screen 650.

In the second selection screen 650 shown in Fig. 9, as the item permitting the viewing for the terminal 50 when the injection related abnormality occurs, setting related to the filling process, setting related to the holding pressure process, the cushion position, the filling time, the V/P switching position, and the filling peak pressure are selected. The other items are selected as the items rejecting the viewing for the terminal 50 except for the items (the injection molding machine name, the injection unit name, and the screw diameter) which are not displayed on the second selection screen 650.

The molding machine maker who manufactures the injection molding machine 10 naturally knows information related to the injection molding machine name, the injection unit name, and the screw diameter, the information is always necessary to analyze the abnormality, and thus, the information may be set to an item which always permits the viewing.

Moreover, in a case where the terminal 50 is not possessed by any of the molding machine user and molding machine maker but is possessed by a third party (for example, a delivery destination of the molding product), the injection molding machine name, the injection unit name, and the screw diameter maybe the items setting the permission or rejection of the viewing for the terminal 50. In addition, the terminal 50 may be used for applications other than the analysis of the abnormality. For example, the terminal 50 may be used to monitor the set value or an actual value of the injection molding machine 10 or the peripheral unit 20 at the delivery destination of the molding product.

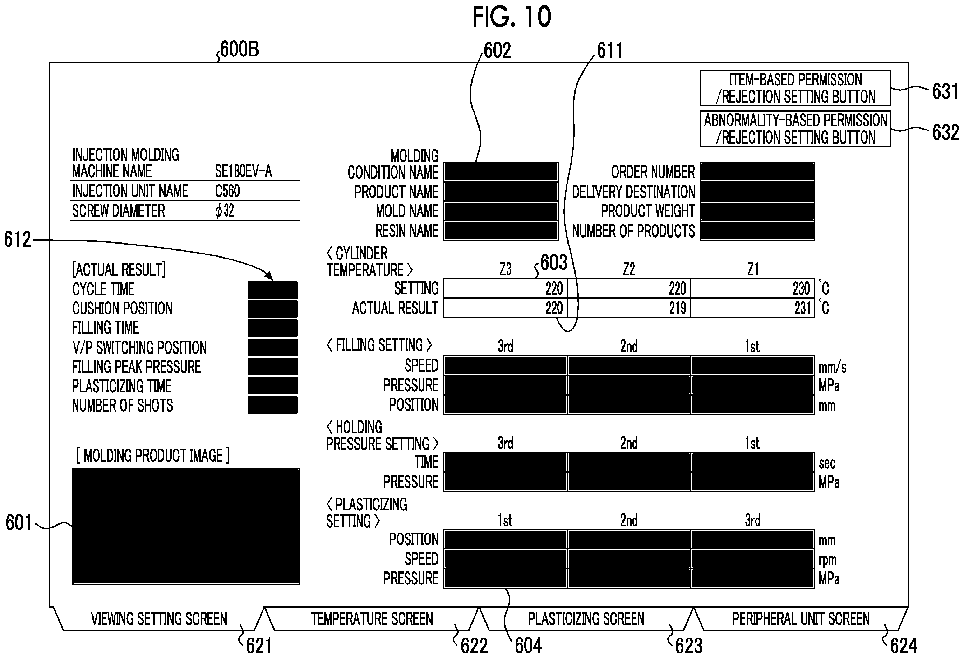

Fig. 10 is a diagram showing a display screen displayed on the terminal according to the selection result of the second selection screen shown in Fig. 9 when the temperature related abnormality occurs. A display screen 600B obtained by processing and editing the display screen 600 of the injection molding machine 10 according to the selection result of the second selection screen 650 shown in Fig. 9 is displayed on the terminal 50. The display data displayed on the terminal 50 can be selected on the injection molding machine 10 side, and it is possible to narrow the display data capable of performing the viewing in the terminal 50 to the display data required to analyze the cause of the temperature related abnormality. The display data unnecessary to analyze the cause of the temperature related abnormality is the display data for which the terminal 50 does not request the information provision. By setting an item for which the terminal 50 does not request the information provision to the item rejecting the viewing for the terminal 50, it is possible to narrow the information that the injection molding machine 10 provides to the terminal 50 to a necessary minimum and it is possible to prevent an excessive information provision.

In the display screen 600B displayed on the terminal 50, as shown in Fig. 10, the display data of the item rejecting the viewing for the injection molding machine 10 is displayed to be hidden in black. However, as described above, the display data may be displayed so as to be hidden by a blank or mosaic, or may be displayed so as to be replaced by a symbol which has no meaning. In any case, the display data displayed on the terminal 50 can be selected on the injection molding machine 10 side and it is possible to narrow the display data capable of performing the viewing in the terminal 50 to the display data required to analyze the cause of the temperature related abnormality.

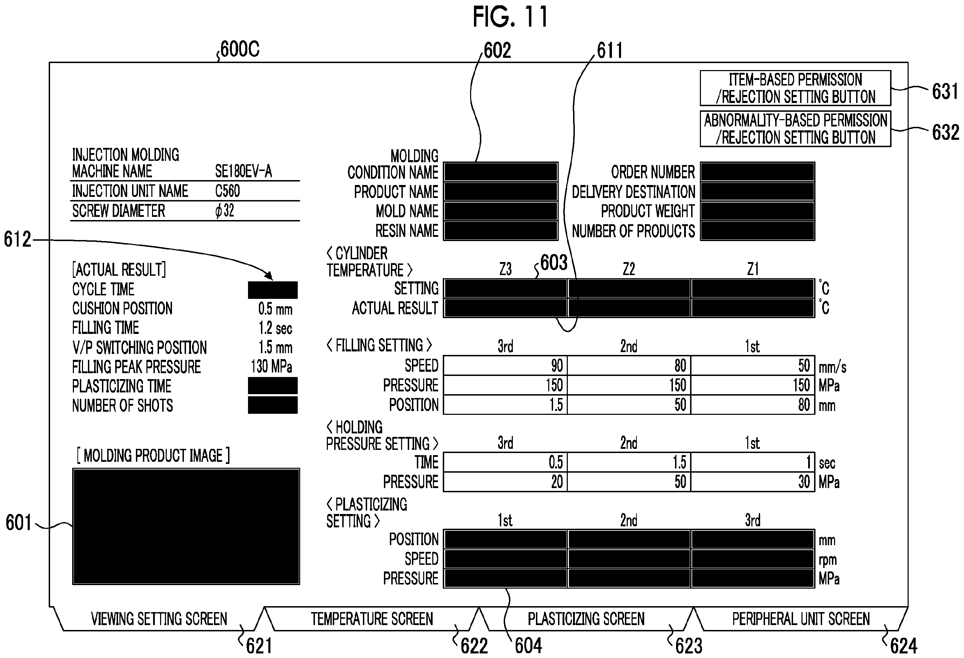

Fig. 11 is a diagram showing a display screen displayed on the terminal according to the selection result of the second selection screen shown in Fig. 9 when the injection related abnormality occurs. A display screen 600C obtained by processing and editing the display screen 600 of the injection molding machine 10 according to the selection result of the second selection screen 650 shown in Fig. 9 is displayed on the terminal 50. The display data displayed on the terminal 50 can be selected on the injection molding machine 10 side, and it is possible to narrow the display data capable of performing the viewing in the terminal 50 to the display data required to analyze the cause of the injection related abnormality. The display data unnecessary to analyze the cause of the injection related abnormality is the display data for which the terminal 50 does not request the information provision. By setting the item for which the terminal 50 does not request the information provision to the item rejecting the viewing for the terminal 50, it is possible to narrow the information that the injection molding machine 10 provides to the terminal 50 to a necessary minimum and it is possible to prevent an excessive information provision.

In the display screen 600C displayed on the terminal 50, as shown in Fig. 11, the display data of the item rejecting the viewing for the injection molding machine 10 is displayed to be hidden in black. However, as described above, the display data may be displayed so as to be hidden by a blank or mosaic, or may be displayed so as to be replaced by a symbol which has no meaning. In any case, the display data displayed on the terminal 50 can be selected on the injection molding machine 10 side and it is possible to narrow the display data capable of performing the viewing in the terminal 50 to the display data required to analyze the cause of the injection related abnormality.

In addition, in the present embodiment, a timing when the viewing permission/rejection setting unit 713 sets the item permitting the viewing for the terminal 50 and the item rejecting the viewing for the terminal 50 according to the content of the abnormality is set before the viewing permission/rejection setting unit 713 receives the viewing requirement from the terminal 50. However, the timing may be set after the viewing permission/rejection setting unit 713 receives the viewing requirement from the terminal 50. Even in the latter case, it is possible to narrow the display data capable of performing the viewing in the terminal 50 to the display data necessary to analyze the cause of the abnormality.

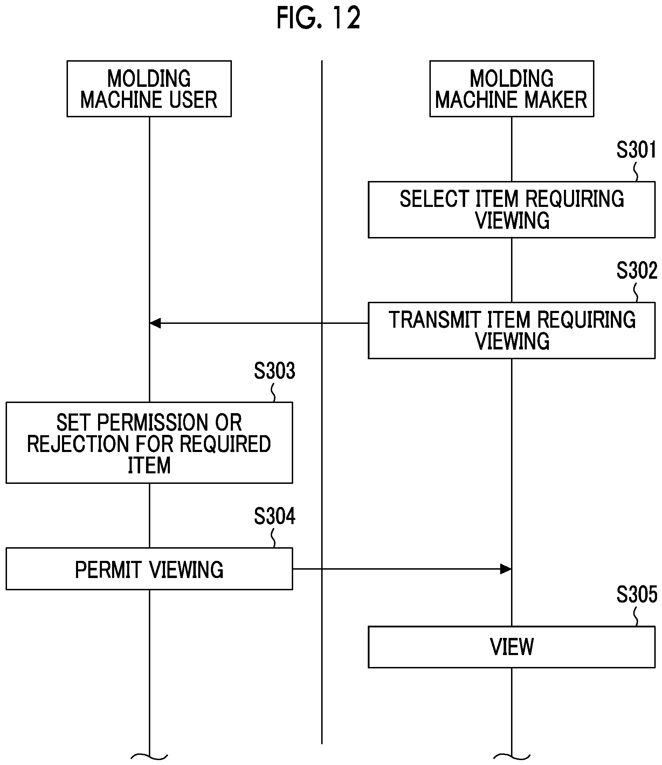

Fig. 12 is a flowchart showing a third example of processing performed by the molding machine maker and the molding machine user. First, the molding machine maker selects an item requiring the viewing (Step S301) and transmits the selected item from the terminal 50 to the injection molding machine 10 (Step S302) . Next, the molding machine user sets the permission or rejection of the viewing for each required item (Step S303) and transmits a signal permitting the viewing from the injection molding machine 10 to the terminal (Step S304) . Thereafter, the molding machine maker views the display data having the item whose viewing is permitted, on the terminal 50 (Step S305) . The processing shown in Fig. 12 may be performed automatically under the controls of the control unit 700 of the injection molding machine 10 and the control unit 500 of the terminal 50 or may be performed manually.

In this case, after the viewing permission/rejection setting unit 713 receives the viewing requirement of the display data from the terminal 50, the viewing permission/rejection setting unit 713 sets the item permitting the viewing of the display data for the terminal 50 and the item rejecting the view of the display data for the terminal 50. Accordingly, as described later, it is possible to narrow an item to apply a viewing permission to the terminal 50, it is possible to decrease the number of items setting the permission or rejection for the terminal 50 in the injection molding machine 10, and it is possible to decrease a labor for setting the permission or rejection for the terminal 50 in the injection molding machine 10, that is, a labor for selecting the permission or rejection.

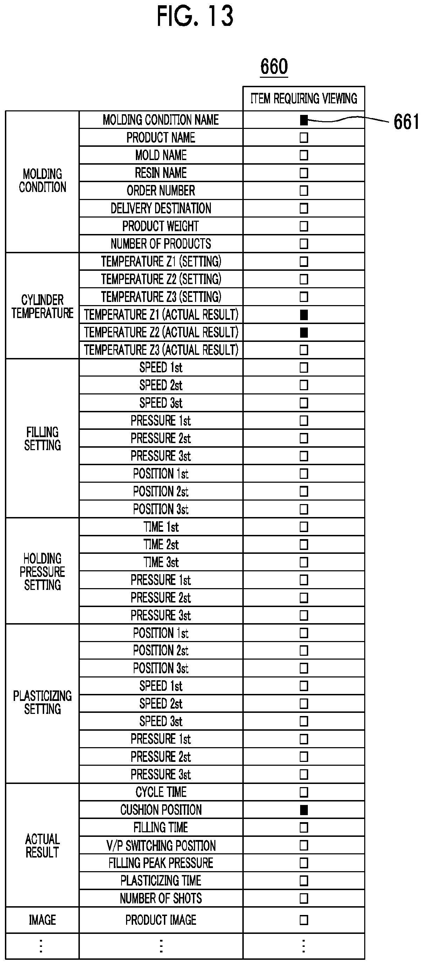

Fig. 13 is a diagram showing a third selection screen for selecting an item to apply the viewing permission to the injection molding machine from the terminal according to an embodiment. For example, a third selection screen 660 for selecting the item to apply the viewing permission to the injection molding machine 10 from the terminal 50 is displayed on the display unit 560 of the terminal 50 when a permission application button (not shown) of the terminal 50 is pushed.

The third selection screen 660 has, for each item, a selection button 661 for selecting whether to apply the viewing permission or not. The selection button 661 displays a selection result and a display of the selection button 661 is switched each time the selection button 661 is pushed. For example, the inside of the selection button 661 being black means that the viewing permission is applied. Meanwhile, the inside of the selection button 661 being blank means that the viewing permission is not applied.

In the third selection screen 660 shown in Fig. 13, the item for applying the viewing permission, the molding condition name, the actual temperature of each of the two zones Z1 and Z2 of the cylinder 310, and the cushion position are selected. The other items are selected as the items which do not apply the viewing permission except for the items (the injection molding machine name, the injection unit name, and the screw diameter) which are not displayed on the third selection screen 660.

The molding machine maker who manufactures the injection molding machine 10 naturally knows information related to the injection molding machine name, the injection unit name, and the screw diameter, the information is always necessary to analyze the abnormality, and thus, the information may be set to an item which always permits the viewing for the terminal 50 without applying the viewing permission from the terminal 50 to the injection molding machine 10. Accordingly, the injection molding machine name, the injection unit name, and the screw diameter are the items which are not displayed on the third selection screen 660.

Moreover, in the case where the terminal 50 is not possessed by any of the molding machine user and molding machine maker but is possessed by a third party (for example, the delivery destination of the molding product), the injection molding machine name, the injection unit name, and the screw diameter may be the items which are displayed on the third selection screen 660. That is, in the case where the terminal 50 is possessed by a thirdparty, the injection moldingmachine name, the injection unit name, and the screw diameter may be an item for selecting whether to apply the viewing permission to the third selection screen 660 or not.

The terminal 50 determines the item to apply the viewing permission according to the selection result of third selection screen 660 and transmits the determined item to the injection molding machine 10. Accordingly, the application of the viewing permission from the terminal 50 is made.

The viewing permission/rejection setting unit 713 sets the item permitting the viewing of the display data for the terminal 50 and the item rejecting the viewing of the display data for the terminal 50, among the items in which the application the viewing permission from the terminal 50 is made. Since the item to apply the viewing permission in the terminal 50 is narrowed, it is possible to decrease the number of items setting the permission or rejection in the injection molding machine 10, and it is possible to decrease a labor for setting the permission or rejection in the injection molding machine 10, that is, a labor for selecting the permission or rejection.

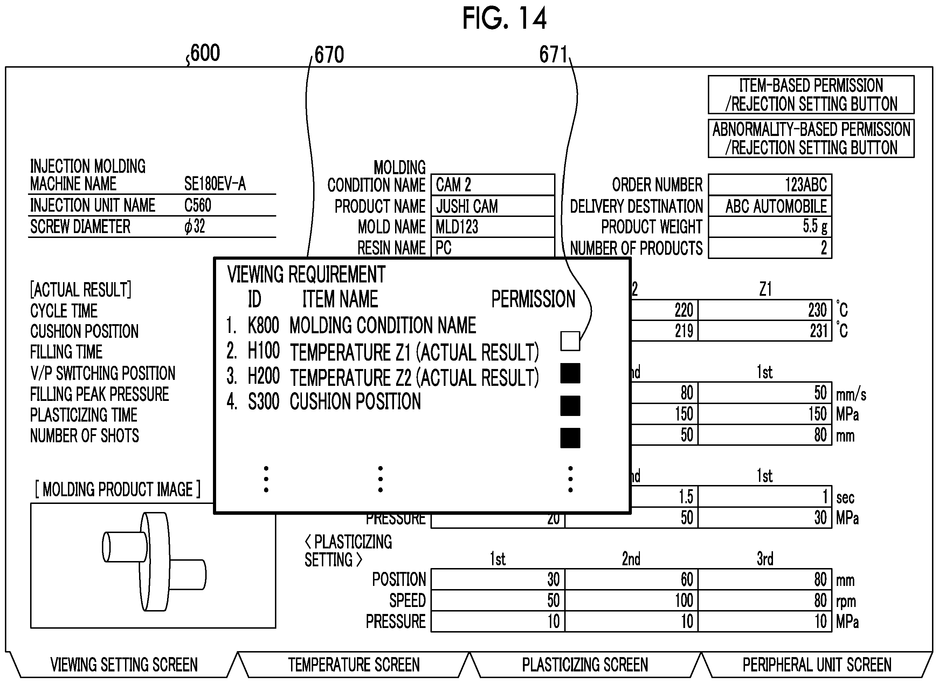

Among the items in which the application of the viewing permission from the terminal 50 is made, the viewing permission/ rejection setting unit 713 displays a fourth selection screen 670 (refer to Fig. 14) for selecting, for each item, the permission or rejection of the viewing of the display data for the terminal 50 on the display unit 760 of the injection molding machine 10. The viewing permission/rejection setting unit 713 sets the item permitting the viewing of the display data for the terminal 50 and the item rejecting the viewing of the display data for the terminal 50, according to a selection result in the fourth selection screen 670.

Fig. 14 is a diagram showing the fourth selection screen which is displayed on the injection molding machine when the application for the viewing permission from the terminal is made according to the embodiment. When the application of the viewing permission from the terminal 50 is made, the fourth selection screen 670 is displayed on the display unit 760 of the injection molding machine 10.

The fourth selection screen 670 has, for each item in which the application of the viewing permission from the terminal 50 is made, a selection button 671 for selecting the permission or rejection of the viewing for the terminal 50. The selection button 671 displays a selection result and a display of the selection button 671 is switched each time the selection button 671 is pushed. For example, the inside of the selection button 671 being black means that the viewing for the terminal 50 is permitted. Meanwhile, the inside of the selection button 671 being blank means that the viewing for the terminal 50 is rejected.

In the fourth selection screen 670 shown Fig. 14, among the items in which the application of the viewing permission from the terminal 50 is made, the molding condition name is set as the item rejecting the viewing for the terminal 50, and the actual temperature of each of the two zones Z1 and Z2 and the cushion position are set as the item permitting the viewing for the terminal 50.

The viewing permission/rejection setting unit 713 sets the item in which the application of the viewing permission from the terminal 50 is not made to the item rejecting the viewing for the terminal 50. The item in which the application of the viewing permission from the terminal 50 is not made is the item for which the terminal 50 does not request the information provision. By setting the item for which the terminal 50 does not request the information provision to the item rejecting the viewing for the terminal 50, it is possible to narrow the information that the injection molding machine 10 provides to the terminal 50 to a necessary minimum and it is possible to prevent an excessive information provision. However, the injection molding machine name, the injection unit name, and the screw diameter are the items which are not displayed on the third selection screen 660 shown in Fig. 13, and may be set as the item permitting the viewing for the terminal 50 without applying the viewing permission from the terminal 50.

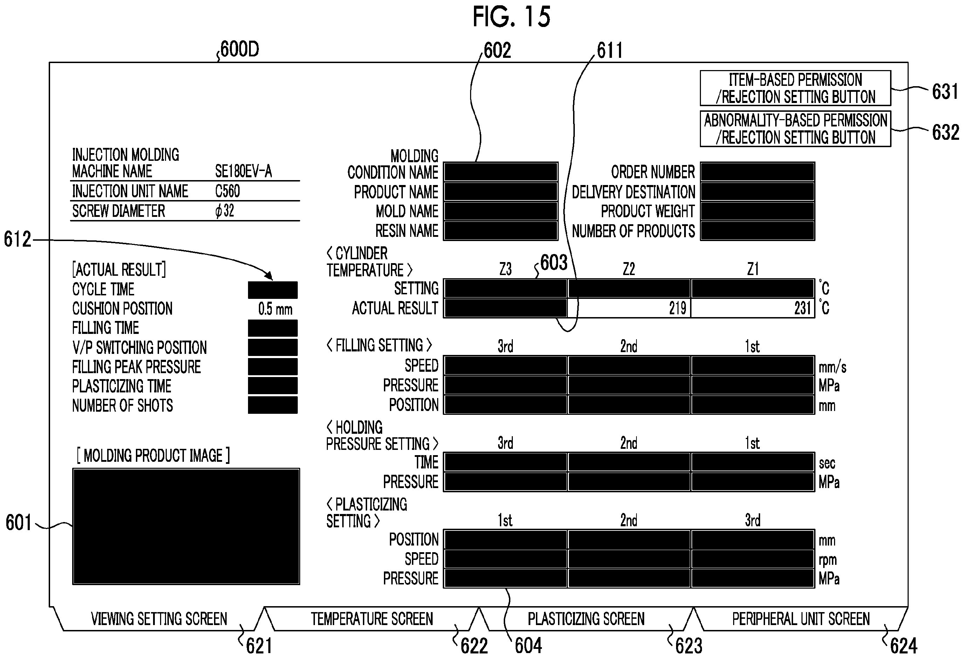

Fig. 15 is a diagram showing a display screen displayed on the terminal according to the selection result of the fourth selection screen shown in Fig. 14. A display screen 600D obtained by processing and editing the display screen 600 of the injection molding machine 10 according to the selection result of the fourth selection screen 670 shown in Fig. 14 is displayed on the terminal 50. The display data displayed on the terminal 50 can be selected on the injection molding machine 10 side and the leakage of the confidential information to the outside can be suppressed.

In the display screen 600D displayed on the terminal 50, as shown in Fig. 15, the display data of the item rejecting the viewing for the injection molding machine 10 is not displayed to be hidden in black. However, as described above, the display data may be displayed so as to be hidden by a blank or mosaic, or may be displayed so as to be replaced by a symbol which has no meaning. In any case, the display data displayed on the terminal 50 can be selected on the injection molding machine 10 side and the leakage of the confidential information to the outside can be suppressed.

In the display screen 600D displayed on the terminal 50, the item in which the viewing permission from the terminal 50 is applied and the viewing is rejected for the injection molding machine 10 and the item in which the application of the viewing permission from the terminal 50 is not made are displayed so as not to be distinguished from each other in Fig. 15. However, the items may be displayed so as to be distinguished from each other. For example, a symbol such as a cross mark may be assigned to the item in which the viewing permission from the terminal 50 is applied and the viewing is rejected for the injection molding machine 10. In addition, a color (for example, red) of filling the display data of the item in which the viewing permission from the terminal 50 is applied and the viewing is rejected for the injection molding machine 10 and a color (for example, black) of filling the display data of the item in which the application of the viewing permission from the terminal 50 is not made may be different from each other. Accordingly, by looking the terminal 50, it is possible to understand a result of the application of the viewing and the item in which the viewing is rejected.

In addition, before the injection molding machine 10 receives the item for applying the viewing permission from the terminal 50, the viewing permission/rejection setting unit 713 may set the item permitting the viewing for the terminal 50 and the item rejecting the viewing for the terminal 50. In this case, according to the setting before the receiving, the viewing permission/rejection setting unit 713 set the item in which the application of the viewing permission from the terminal 50 is made to any one of the item permitting the viewing for the terminal 50 and the item rejecting the viewing for the terminal 50. In addition, the viewing permission/rejection setting unit 713 sets the item in which the application of the viewing permission from the terminal 50 is not made to the item rejecting the viewing for the terminal 50, regardless of the setting before the receiving. The item in which the application of the viewing permission from the terminal 50 is not made is the item for which the terminal 50 does not request the information provision. By setting the item for which the terminal 50 does not request the information provision to the item rejecting the viewing for the terminal 50, it is possible to narrow the information that the injection molding machine 10 provides to the terminal 50 to a necessary minimum and it is possible to prevent an excessive information provision.

The control unit 700 may display a result (hereinafter, referred to as a "comparison result"), which is obtained by comparing the item in which the viewing permission from is applied from the terminal 50 and an item in which the viewing permission is set for the terminal 50 before the viewing permission is applied from the terminal 50, on the display unit 760 of the injection molding machine 10. The molding machine user looks the comparison result displayed on the display unit 760 and thus, can understand a useless item (an item that the terminal 50 does not request the information provision) among the items in which the viewing permission for the terminal 50 is set in advance. Accordingly, it is possible to change the setting for the viewing requirement from the terminal 50 on and after. It is possible to narrow the information that the injection molding machine 10 provides to the terminal 50 to a necessary minimum and it is possible to prevent an excessive information provision.

As shown in Fig. 3, the control unit 700 includes a viewing prohibition unit 714 before occurrence of abnormality prohibits the viewing of the display data, which is displayed on the display screen 600 of the injection molding machine 10, for the terminal 50 while the injection molding machine 10 or the peripheral unit 20 operates normally. When the abnormality occurs in the injection molding machine 10 or the peripheral unit 20, the viewing prohibition unit 714 before occurrence of abnormality releases the viewing prohibition of the display data for the terminal 50. The remote viewing from the terminal 50 to the injection molding machine 10 is prohibited until the abnormality occurs in the injection molding machine 10 or the peripheral unit 20. Unnecessary remote viewing is prohibited when abnormality has not occurred, and thus, the leakage of confidential information can be further suppressed.

The control unit 700 has an operation permission/rejection setting unit 715 for setting the permission or rejection of operating the display screen 600 of the injection molding machine 10 from the terminal 50. The operation permission/rejection setting unit 715 sets the permission or rejection of the operation for each operation item. Similarly to the setting of the viewing permission/rejection setting unit 713, the setting of the operation permission/rejection setting unit 715 is performed by operating the operation unit 750 of the injection molding machine 10 while looking the display screen displayed on the display unit 760 of the injection molding machine 10.

The operation permission/rejection setting unit 715 may permit the screen switching buttons 621 to 624 of the display screen 600 of the injection molding machine 10 to be operated from the terminal 50. In this case, if the screen switching button 624 is operated from the terminal 50, the peripheral unit screen is displayed on the display unit 760 of the injection molding machine10, and as a result, the peripheral unit screen is displayed on display unit 560 of the terminal 50. It is possible to switch the display screen displayed on the display unit 760 of the injection molding machine 10 on the terminal 50 side, and it is possible to switch the display screen displayed on the display unit 560 of the terminal 50.

The operation permission/rejection setting unit 715 may permit the input operation from the terminal 50 to the input fields 603 and 604 of the display screen 600 of the injection molding machine 10. If the cause of the abnormality is an incorrect set value input to the input fields 603 and 604, a correct set value can be input to the input fields 603 and 604 of the display screen 600 of the injection molding machine 10 on the terminal 50 side, and thus, it is possible to remove the cause of the abnormality.

The operation permission/rejection setting unit 715 may reject the input operation from the terminal 50 for changing the setting of the viewing permission/rejection setting unit 713. For example, the operation permission/rejection setting unit 715 rejects to operate the item-based permission/rejection setting button 631 of the display screen 600 of the injection molding machine 10 from the terminal 50. Similarly, the operation permission/rejection setting unit 715 rejects to operate the abnormality-based permission/rejection setting button 632 of the display screen 600 of the injection molding machine 10 from the terminal 50. It is possible to prohibit a setting change of the viewing permission/rejection setting unit 713 due to the input operation in the terminal 50 and it is possible to prevent the leakage of the confidential information.

In addition, the operation permission/rejection setting unit 715 deletes the item-based permission/rejection setting button 631 and the abnormality-based permission/rejection setting button 632 from the display screens 600A, 600B, 600C, and 600D displayed on the terminal 50 so as to reject to operations of the buttons. In this case, the item-based permission/rejection setting button 631 and the abnormality-based permission/rejection setting button 632 are not displayed on the display screens 600A, 600B, 600C, and 600D.

The control unit 700 has a viewing situation display unit 716 for displaying the viewing screen (for example, any one of the display screens 600A, 600B, 600C, and 600D) viewed on the terminal 50 on the display unit 760 of the injection molding machine 10. A view situation in the terminal 50 can be monitored in injection molding machine 10. Therefore, it can be confirmed on the injection molding machine 10 that the confidential information is not displayed on the terminal 50. Moreover, in a case where the confidential information is erroneously displayed on the terminal 50, it is possible not to display the confidential information on the terminal 50 in the injection molding machine 10.

Hereinbefore, the embodiments or the like of the injection molding data management device and the injection molding machine are described. However, the present invention is not limited to the above-described embodiments or the like, and various modifications and improvements are possible within the scope of the present invention described in the claims.

### Brief Description of the Reference Symbols

10: injection molding machine
20: peripheral unit
50: terminal
500: control unit
560: display unit
700: control unit (injection molding data management device)
712: display data storage unit
713: viewing permission/rejection setting unit
714: viewing prohibition unit before occurrence of abnormality
715: operation permission/rejection setting unit
716: viewing situation display unit
760: display unit

## Claims

1. An injection molding data management device (700) comprising:
a display data storage unit (712) configured to store display data displayed on a display screen of an injection molding machine (10); and
a viewing permission/rejection setting unit (713) configured to set, with respect to a viewing requirement of the display data from a terminal (50) communicably connected via a network (90), an item permitting viewing of the display data for the terminal (50) and an item rejecting the viewing of the display data for the terminal (50),
**characterized in that**
the viewing permission/rejection setting unit (713) is configured to set, for each content of an abnormality occurring in the injection molding machine (10) or a peripheral unit (20) of the injection molding machine (10), the item permitting the viewing of the display data for the terminal and the item rejecting the viewing of the display data for the terminal (50).

2. An injection molding data management device (700) comprising:
a display data storage unit (712) configured to store display data displayed on a display screen of an injection molding machine (10);
a viewing permission/rejection setting unit (713) configured to set, with respect to a viewing requirement of the display data from a terminal (50) communicably connected via a network (90), an item permitting viewing of the display data for the terminal (50) and an item rejecting the viewing of the display data for the terminal (50); **characterized in that** the injection molding data management device comprises
a viewing prohibition unit before occurrence of abnormality (714), and
the viewing prohibition unit before occurrence of abnormality (714) is configured to prohibit the viewing of the display data for the terminal (50) while the injection molding machine (10) or a peripheral unit (20) of the injection molding machine is operated normally and release prohibition of the viewing of the display data for the terminal (50) when an abnormality occurs in the injection molding machine (10) or the peripheral unit (20) of the injection molding machine (10).

3. The injection molding data management device (700) according to claim 1 or 2,
wherein before the viewing permission/rejection setting unit (713) receives the viewing requirement of the display data from the terminal (50), the viewing permission/rejection setting unit (713) is configured to set the item permitting the viewing of the display data for the terminal (50) and the item rejecting the viewing of the display data for the terminal (50).

4. The injection molding data management device (700) according to any one of claims 1 to 3,
wherein after the viewing permission/rejection setting unit (713) receives the viewing requirement of the display data from the terminal (50), the viewing permission/rejection setting unit (713) is configured to set the item permitting the viewing of the display data for the terminal (50) and the item rejecting the viewing of the display data for the terminal (50).

5. The injection molding data management device (700) according to any one of claims 1 to 4,
wherein the viewing permission/rejection setting unit (713) is configured to set, with respect to the viewing requirement on the display screen of the injection molding machine (10) from the terminal (50), the item permitting the viewing of the display data for the terminal (50) and the item rejecting the viewing of the display data for the terminal (50).

6. The injection molding data management device (700) according to any one of claims 1 to 5, further comprising:
an operation permission/rejection setting unit (715) configured to set permission or rejection of operating the display screen of the injection molding machine (10) from the terminal (50) .

7. The injection molding data management device (700) according to any one of claims 1 to 6, further comprising:
a viewing situation display unit (716) configuredto display a viewing screen viewed by the terminal (50) on a display unit (560) of the injection molding machine (10).

8. An injection molding machine comprising:
the injection molding data management device (700) according to any one of claims 1 to 7.

## Patentansprüche

1. Spritzgießdatenverwaltungsvorrichtung (700), umfassend:
eine Anzeigedatenspeichereinheit (712), die konfiguriert ist, Anzeigedaten, die auf einem Anzeigebildschirm einer Spritzgießmaschine (10) angezeigt werden, zu speichern; und
eine Ansichtserlaubnis-/verweigerungs-Festlegungseinheit (713), welche konfiguriert ist, in Bezug auf eine Ansichtsanforderung der Anzeigedaten von einem Endgerät (50), welches kommunizierbar via ein Netzwerk (90) verbunden ist, ein Element festzulegen, welches Ansehen der Anzeigedaten für das Endgerät (50) erlaubt, und ein Element festzulegen, welches das Ansehen der Anzeigedaten für das Endgerät (50) verweigert,
**dadurch gekennzeichnet, dass**
die Ansichtserlaubnis-/verweigerungs-Festlegungseinheit (713) konfiguriert ist, für jeden Inhalt einer Abnormalität, die in der Spritzgießmaschine (10) oder einer Peripherieeinheit (20) der Spritzgießmaschine (10) auftritt, das Element festzulegen, welches das Ansehen der Anzeigedaten für das Endgerät erlaubt, und das Element festzulegen, welches das Ansehen der Anzeigedaten für das Endgerät (50) verweigert.

2. Spritzgießdatenverwaltungsvorrichtung (700), umfassend:
eine Anzeigedatenspeichereinheit (712), welche konfiguriert ist, Anzeigedaten, die auf einem Anzeigebildschirm einer Spritzgießmaschine (10) angezeigt werden, zu speichern;
eine Ansichtserlaubnis-/verweigerungs-Festlegungseinheit (713), welche konfiguriert ist, in Bezug auf eine Ansichtsanforderung der Anzeigedaten von einem Endgerät (50), welches kommunizierbar via ein Netzwerk (90) verbunden ist, ein Element, welches Ansehen der Anzeigedaten für das Endgerät (50) erlaubt, und ein Element, welches das Ansehen der Anzeigedaten für das Endgerät (50) verweigert, festzulegen;
**dadurch gekennzeichnet, dass**
die Spritzgießdatenverwaltungsvorrichtung eine Ansichtsverbotseinheit vor Auftreten von Abnormalität (714) umfasst, und
die Ansichtsverbotseinheit vor Auftreten von Abnormalität (714) konfiguriert ist, das Ansehen der Anzeigedaten für das Endgerät (50) zu verbieten, während die Spritzgießmaschine (10) oder eine Peripherieeinheit (20) der Spritzgießmaschine normal betrieben wird, und Verbot des Ansehens der Anzeigedaten für das Endgerät (50) aufzuheben, wenn eine Abnormalität in der Spritzgießmaschine (10) oder der Peripherieeinheit (20) der Spritzgießmaschine (10) auftritt.

3. Spritzgießdatenverwaltungsvorrichtung (700) nach Anspruch 1 oder 2,
wobei, bevor die Ansichtserlaubnis-/verweigerungs-Festlegungseinheit (713) die Ansichtsanforderung der Anzeigedaten von dem Endgerät (50) empfängt, die Ansichtserlaubnis-/verweigerungs-Festlegungseinheit (713) konfiguriert ist, das Element, welches das Ansehen der Anzeigedaten für das Endgerät (50) erlaubt, und das Element, welches das Ansehen der Anzeigedaten für das Endgerät (50) verweigert, festzulegen.

4. Spritzgießdatenverwaltungsvorrichtung (700) nach einem der Ansprüche 1 bis 3,
wobei, nachdem die Ansichtserlaubnis-/verweigerungs-Festlegungseinheit (713) die Ansichtsanforderung der Anzeigedaten von dem Endgerät (50) empfängt, die Ansichtserlaubnis-/verweigerungs-Festlegungseinheit (713) konfiguriert ist, das Element, welches das Ansehen der Anzeigedaten für das Endgerät (50) erlaubt, und das Element, welches das Ansehen der Anzeigedaten für das Endgerät (50) verweigert, festzulegen.

5. Spritzgießdatenverwaltungsvorrichtung (700) nach einem der Ansprüche 1 bis 4,
wobei die Ansichtserlaubnis-/verweigerungs-Festlegungseinheit (713) konfiguriert ist, in Bezug auf die Ansichtsanforderung auf dem Anzeigebildschirm der Spritzgießmaschine (10) von dem Endgerät (50), das Element, welches das Ansehen der Anzeigedaten für das Endgerät (50) erlaubt, und das Element, welches das Ansehen der Anzeigedaten für das Endgerät (50) verweigert, festzulegen.

6. Spritzgießdatenverwaltungsvorrichtung (700) nach einem der Ansprüche 1 bis 5, ferner umfassend:
eine Bedien-Erlaubnis/-verweigerungs-Festlegungseinheit (715), welche konfiguriert ist, Erlaubnis oder Verweigerung des Bedienens des Anzeigebildschirms der Spritzgießmaschine (10) von dem Endgerät (50) festzulegen.

7. Spritzgießdatenverwaltungsvorrichtung (700) nach einem der Ansprüche 1 bis 6, ferner umfassend:
eine Betrachtungssituations-Anzeigeeinheit (716), die konfiguriert ist, einen Betrachtungsbildschirm, der von dem Endgerät (50) gesehen wird, an einer Anzeigeeinheit (560) der Spritzgießmaschine (10) anzuzeigen.

8. Spritzgießmaschine, umfassend:
die Spritzgießdatenverwaltungsvorrichtung (700) nach einem der Ansprüche 1 bis 7.

## Revendications

1. Un dispositif de gestion de données de moulage par injection (700) comprenant :
une unité de stockage de données d'affichage (712) configurée pour stocker des données d'affichage affichées sur un écran d'affichage d'une machine de moulage par injection (10) ; et
une unité de réglage de permission/refus de visualisation (713) configurée pour régler, par rapport à une exigence de visualisation des données d'affichage en provenance d'un terminal (50) connecté en communication par l'intermédiaire d'un réseau (90), un élément permettant la visualisation des données d'affichage pour le terminal (50) et un élément refusant la visualisation des données d'affichage pour le terminal (50) ;
**caractérisé en ce que** :
l'unité de réglage de permission/refus de visualisation (713) est configurée pour régler, pour chaque contenu d'une anomalie se produisant dans la machine de moulage par injection (10) ou dans une unité périphérique (20) de la machine de moulage par injection (10), l'élément permettant la visualisation des données d'affichage pour le terminal et l'élément refusant la visualisation des données d'affichage pour le terminal (50).

2. Un dispositif de gestion de données de moulage par injection (700) comprenant :
une unité de stockage de données d'affichage (712) configurée pour stocker des données d'affichage affichées sur un écran d'affichage d'une machine de moulage par injection (10) ;
une unité de réglage de permission/refus de visualisation (713) configurée de manière à régler, par rapport à une exigence de visualisation des données d'affichage en provenance d'un terminal (50) connecté en communication par l'intermédiaire d'un réseau (90), un élément permettant la visualisation des données d'affichage pour le terminal (50) et un élément refusant la visualisation des données d'affichage pour le terminal (50) ;
**caractérisé en ce que** le dispositif de gestion de données de moulage par injection comprend :
une unité d'interdiction de visualisation avant la survenue d'une anomalie (714) ; et
l'unité d'interdiction de visualisation avant la survenue d'une anomalie (714) est configurée de manière à interdire la visualisation des données d'affichage pour le terminal (50) tandis que la machine de moulage par injection (10) ou une unité périphérique (20) de la machine de moulage par injection fonctionne normalement, et à libérer l'interdiction de la visualisation des données d'affichage pour le terminal (50) lorsqu'une anomalie survient dans la machine de moulage par injection (10) ou dans l'unité périphérique (20) de la machine de moulage par injection (10).

3. Le dispositif de gestion de données de moulage par injection (700) selon la revendication 1 ou 2,
dans lequel, avant que l'unité de réglage de permission/refus de visualisation (713) reçoive l'exigence de visualisation des données d'affichage en provenance du terminal (50), l'unité de réglage de permission/refus de visualisation (713) est configurée de manière à régler l'élément permettant la visualisation des données d'affichage pour le terminal (50) et l'élément refusant la visualisation des données d'affichage pour le terminal (50).

4. Le dispositif de gestion de données de moulage par injection (700) selon l'une quelconque des revendications 1 à 3,
dans lequel, après que l'unité de réglage de permission/refus de visualisation (713) a reçu l'exigence de visualisation des données d'affichage en provenance du terminal (50), l'unité de réglage de permission/refus de visualisation (713) est configurée de manière à régler l'élément permettant la visualisation des données d'affichage pour le terminal (50) et l'élément refusant la visualisation des données d'affichage pour le terminal (50).

5. Le dispositif de gestion de données de moulage par injection (700) selon l'une quelconque des revendications 1 à 4,
dans lequel l'unité de réglage de permission/refus de visualisation (713) est configurée de manière à régler, par rapport à l'exigence de visualisation sur l'écran d'affichage de la machine de moulage par injection (10) en provenance du terminal (50), l'élément permettant la visualisation des données d'affichage pour le terminal (50) et l'élément refusant la visualisation des données d'affichage pour le terminal (50).

6. Le dispositif de gestion de données de moulage par injection (700) selon l'une quelconque des revendications 1 à 5, comprenant en outre :
une unité de réglage de permission/refus d'opération (715) configurée de manière à régler une permission ou un refus d'opération de l'écran d'affichage de la machine de moulage par injection (10) à partir du terminal (50).

7. Le dispositif de gestion de données de moulage par injection (700) selon l'une quelconque des revendications 1 à 6, comprenant en outre :
une unité d'affichage de situation de visualisation (716) configurée de manière à afficher un écran de visualisation visualisé par le terminal (50) sur une unité d'affichage (560) de la machine de moulage par injection (10).

8. Un machine de moulage par injection comprenant :
le dispositif de gestion de données de moulage par injection (700) selon l'une quelconque des revendications 1 à 7.
